**Europäisches Patentamt**

**European Patent Office**

**Office européen des brevets**

(19)

(11) Publication number : **0 515 207 A1**

(12) # EUROPEAN PATENT APPLICATION

(21) Application number : **92304662.7**

(22) Date of filing : **22.05.92**

(51) Int. Cl.⁵ : **A01G 27/00**

(30) Priority : **24.05.91 GB 9111240**

(43) Date of publication of application :
**25.11.92 Bulletin 92/48**

(84) Designated Contracting States :
**BE DK FR GB NL SE**

(71) Applicant : **RENTOKIL LIMITED**
**Felcourt**
**East Grinstead, West Sussex RH19 2JY (GB)**

(72) Inventor : **Lothian, Michael Thomas**
**2 Sunnyside Cottages, Harwoods Lane**
**East Grinstead, West Sussex RH19 4NJ (GB)**
Inventor : **Smith, James Kenneth**
**28 Elnup Avenue, Shevington**
**Nr. Wigan, Lancashire WN6 8AT (GB)**

(74) Representative : **Carter, Caroline Ann et al**
**ABEL & IMRAY Northumberland House**
**303-306 High Holborn**
**London WC1V 7LH (GB)**

(54) **Plant watering system.**

(57)  An insert 16 of a water-permeable material such as brick, stone, wood, or a porous plastics material, is used in a subirrigation system for plants to control the rate of flow of water through a hollow member 12 which is packed with a water-permeable material such as sand, gravel, cultivation medium or a fibrous material, and which connects a reservoir 7 with the cultivation medium 6 to be irrigated.

Fig.1.

EP 0 515 207 A1

The invention relates to a system for delivering a liquid, especially water or a liquid fertilizer, to a cultivation medium for plants.

There have been numerous prior proposals for so-called subirrigation systems for plants, which provide water to plants from below. Many of the proposed systems are suitable for use as "self-watering" systems, which supply water over a prolonged period, requiring filling only at relatively widely-spaced intervals of time.

One prior proposal for a subirrigation system includes buried conduits having openings through which water may be delivered to the surrounding soil. In modifications of this proposal, wicks extend from the conduits, or from water tanks joined by the conduits, into the soil, while a further proposal involves the use of a wick buried beneath the plants to be watered, the wick, which is supported on a layer of water-impermeable material, extending generally horizontally through the soil and having one end immersed in a reservoir. In yet further proposals, a reservoir which forms the lower portion of a plant pot, or which is buried in a plant pot or in the ground, is provided with a wick or a hollow member filled with a water-permeable capillary material, one end of the wick or hollow member being immersed in the water in the reservoir and the other end being in communication with the cultivation medium for the plant(s) so that water can pass by capillary action from the reservoir to the cultivation medium.

Despite the many prior proposals that have been made for subirrigation systems, there remains a need for an irrigation system capable of delivering a controlled amount of water over an extended time.

In our initial attempts to solve this problem, we experimented with the use of one of various different capillary materials, for example, grit, alumina, sawdust, absorbent starch granules, sand and mineral fibres/wool, in a hollow member extending between a reservoir and a cultivation medium to be irrigated, but failed to achieve any significant control over the rate of delivery of water from the reservoir to the cultivation medium.

The present invention provides apparatus for delivering a liquid to a cultivation medium for plants, which comprises a reservoir and an elongate hollow member which has first and second ends and, for at least part of its length, Is impermeable to the liquid, the first end of the hollow member being positioned in the reservoir and the second being positioned outside or conterminous with the reservoir, the hollow member containing liquid-permeable means through which, in use, liquid can pass from the reservoir to the cultivation medium, the liquid-permeable means comprising, at least in part, an insert comprising substantially non-compressible liquid-permeable material, and the insert being arranged such that substantially all the liquid which passes from the reservoir to the cultivation medium passes through the insert.

The invention also provides a method of delivering a liquid to a cultivation medium for plants wherein apparatus in accordance with the invention is used, the liquid being introduced into the reservoir.

The invention further provides the use of an insert comprising substantially non-compressible liquid-permeable material, in a system for delivering a liquid to a cultivation medium for plants, to control the passage of a liquid through a hollow member through which the liquid passes from a reservoir to the cultivation medium.

In accordance with the invention, the liquid passes through the hollow member from the reservoir to the cultivation medium in which the plant(s) is/are set, or is/are to be set. The liquid can pass either directly or indirectly from the hollow member into the cultivation medium. Thus, the cultivation medium may be in direct contact with the liquid-permeable means in the hollow member or may, for example, be in contact with a liquid-permeable material into which the hollow member opens and through which the liquid is conveyed by capillary action.

The liquid to be delivered in accordance with the invention will normally be water or an aqueous liquid, for example, an aqueous fertilizer, and for convenience will in general be referred to herein as water. It is to be understood, however, that, where appropriate, the invention extends to the delivery of liquids other than water.

The reservoir is advantageously positioned beneath the cultivation medium to be irrigated, in which case the hollow member, in use, preferably extends generally upwards, the lower, or first, end of the hollow member preferably abutting the bottom of the reservoir (that is, being in contact with or close to the bottom). The upper, or second, end of the hollow member may lie in the same plane as (that is, be conterminous with) the top wall of the reservoir, or may extend into the cultivation medium to be irrigated, or into a liquid-permeable medium in contact with the cultivation medium. The two last-mentioned possibilities may be advantageous when plants are shallow-rooted, and/or when the depth of cultivation medium above the reservoir is unusually great. The reservoir may, if desired, have an upwardly extending filling tube which extends above the cultivation medium. Alternatively, water may be supplied to the reservoir through, for example, a generally horizontal conduit, this arrangement being particularly suitable where, for example, a plurality of reservoirs are buried in the ground; in the last-mentioned case the reservoirs may, if desired, be connected in series, or may be fed from a common feed conduit.

The reservoir may have any convenient form. In one embodiment of the invention, the reservoir forms the lower portion of a plant-container, in which case the cultivation medium may, for example, be supported by a false bottom of the container, which false bottom also forms the upper wall of the reservoir. Alternatively, a plurality of plant-containers, each provided with at least one hollow member, may be supported above a common reservoir into which the lower ends of the hollow members extend.

In a further embodiment of the invention, the reservoir is buried in the cultivation medium in a plant-container, or in the ground. In this embodiment a plurality of reservoirs may, as mentioned above, be connected in series, or may be fed from a common feed conduit. Reservoirs to be buried in the ground may conveniently be of round or rectangular cross-section, although any other suitable shape may be used if desired.

Although certain of the reservoirs described above are separate containers for the liquid, the term reservoir as used herein extends to any supply means for a liquid from which the liquid may pass into a hollow member. Thus, for example, the reservoir may comprise a conduit from which one or more hollow members extend. Such a conduit may, if desired, be of flexible material, or may comprise one or more flexible portions such that the conduit can readily be bent to a desired configuration.

It will be appreciated that where, as is preferred, the reservoir is positioned below the cultivation medium to be irrigated, the reservoir should comprise an upper wall, or a lid, to prevent cultivation medium from entering the reservoir.

At least a portion of the hollow member is liquid-impermeable, so that substantially all the liquid delivered to the cultivation medium passes through the insert. Thus, in the preferred arrangement, where the hollow member extends generally upwards, water should not enter the hollow member above the level of insert. In more general terms, at least the portion of the hollow member between the insert and the maximum water level in the reservoir should be impermeable. For convenience, the hollow member will normally be liquid-impermeable throughout its length.

The upper, or second, end of the hollow member is preferably open to facilitate introduction of the insert into the hollow member. The lower, or first, end of the hollow member may be open or closed. If it is closed, openings, for example, holes or slits, are preferably provided in a wall of the hollow member in the region of the lower or first end so that water in the reservoir can readily pass into the interior of the hollow member. In principle either the first and/or second end of the hollow member could be closed and free from apertures, water passing into and/or out of the hollow member through one or more water-permeable wall portions in the region of the end(s) of the hollow member, but this arrangement is not at present preferred. If both ends of the hollow member are closed in use, means must be provided to permit the introduction of the insert into the hollow member. Thus, for example, the upper end of the hollow member could be provided with a removable lid, or the hollow member could be made in two parts, one of which is a force fit in the other. Any hollow member for use in accordance with the invention may, of course, be made up of two or more parts which cooperate to provide a conduit extending from the liquid in the reservoir to a cultivation medium or other permeable material positioned outside the reservoir.

The insert contained in the hollow member, at least part of which insert is liquid-permeable, can, and preferably does, act to control the passage of water through the hollow member. The liquid-permeable material of the insert is substantially non-compressible so that the permeability of the insert is not changed unpredictably by compression of the insert during installation, and, preferably, the insert, or the liquid-permeable part thereof, is itself substantially non-compressible. This is especially important if, as is preferred, the hollow member is frustoconical and tapers towards the first end thereof. The insert comprises a member or body, rather than, for example, loose material without a definite form. In a preferred embodiment of the invention, the liquid-permeable insert material is substantially rigid so that the insert, or the liquid-permeable part thereof, is itself substantially rigid. The insert is preferably such that it is substantially unaffected by the passage of the liquid through it.

In one embodiment of the invention, which is at present preferred, the insert extends for only part of the length of the hollow member. In this case, the outer shape and dimensions of the insert preferably correspond to the shape and dimensions of a portion of the interior of the hollow member, so that the insert extends across the entire cross-section of the said portion of the hollow member. For convenience, the insert is preferably positioned in a portion of the hollow member remote from the region where water enters the hollow member from the reservoir; when the hollow member extends substantially vertically, the insert is thus advantageously situated in the upper region of the hollow member.

Substantially the whole of the insert may be liquid-permeable, in which case the insert is preferably substantially non-compressible. Alternatively, only part of the insert may comprise liquid-permeable material, the remainder comprising a liquid-impermeable material. Thus, for example, a cylindrical core of liquid-permeable material may be surrounded by an annulus of liquid-impermeable material. A suitable liquid-impermeable material is an impermeable plastics material, for example, polypropylene or polystyrene. Where only part of the insert is liquid-permeable, the liquid-permeable part thereof is preferably non-compressible.

Whatever the form of the insert, it may be advantageous for the exterior of the insert, or the interior of the portion of the hollow member in which the insert is to be positioned, to be provided with a layer of liquid-impermeable material, preferably an elastomeric material, that can prevent water passing round the side of the insert. A suitable liquid-impermeable material for this purpose is a natural or synthetic rubber.

In another embodiment of the invention, which is not at present preferred, the insert extends for substantially the whole length of the hollow member and may be, for example, in the form of a rod which can be dropped into the hollow member. Where an insert is used as the sole liquid-permeable means, the insert need not be, and preferably is not, a tight fit in the hollow member so that it can readily be withdrawn and replaced.

The invention further provides apparatus for delivering a liquid to a cultivation medium for plants, the apparatus comprising a reservoir for the liquid and an insert comprising substantially non-compressible liquid-permeable material through which, in use, the liquid can pass from the reservoir to the cultivation medium, one end of the insert being positioned in the reservoir and the insert extending, preferably generally upwards, from the said one end, the insert being surrounded, for at least part of its length, by a hollow member which is impermeable to the liquid.

The invention also provides the use of a liquid-permeable substantially non-compressible elongate body, in a system for delivering a liquid to a cultivation medium for plants, to control the passage of the liquid from a reservoir for the liquid to the cultivation medium, one end of the body being positioned in the reservoir and the body extending, preferably generally upwards, from the said one end and being surrounded, for at least part of its length, by a covering which is impermeable to the liquid.

It will normally be desirable that substantially the whole of that part of the body (or insert) which is positioned within the reservoir, apart from a portion at the lower end, be provided with a water-impermeable covering, thus ensuring that water entering the body has to travel substantially the entire length of the body. Other arrangements may however be used where necessary.

Examples of substantially non-compressible liquid-permeable materials which may be used for the insert or elongate body are materials made by moulding, for example by moulding particulate or fibrous materials, with or without subsequent heating at high temperatures, to give a material in which narrow and/or tortuous passageways extend through the material, and wood, which inherently contains such passageways. Among materials that may be moulded, alone or mixed with other materials, to give suitable liquid-permeable materials are mortar, concrete, plaster, wood fibres, sawdust, porous plastics materials, for example, polyethylene or polyurethane in porous form, sintered glass, and nylon mesh, while materials whose manufacture includes a firing step include brick, terracotta and ceramics. Where appropriate, the liquid-permeable insert materials may be formed into the desired shape by extrusion. Plaster inserts may, if desired, be cut from sheets of plasterboard, and where wood, brick or terracotta are used, these materials may also be cut. Pumice and certain types of stone, for example, sandstone and chalk, which may be regarded as naturally fired materials, may also have passageways sufficiently long and tortuous to give a suitable permeability. Inserts of wood could, if desired, be pre-treated to reduce the possibility of the wood rotting in use.

As indicated above, the insert, or the liquid-permeable part thereof, may comprise a porous plastics material. Such a porous plastics material may readily be moulded or extruded to the desired shape for use as an insert. The porous plastics material suitably comprises plastics particles formed into a rigid array, for example, by compression with or without heating, such that narrow and/or tortuous passageways are provided through the material. The permeability of the material can be controlled to some extent by controlling the closeness of packing of the particles. The term "porous plastics material" includes liquid-permeable plastics materials generally.

Where a porous plastics material is to be used in a system for the irrigation of plants, the liquid to be conveyed to the plants will normally be water, or an aqueous medium. If water, or an aqueous medium, is to be conveyed through a porous plastics material by capillary action, the surface tension at the liquid/plastics interface must not be so great that penetration of the pores of the plastics material by the water or aqueous medium is prevented. Reduction in the surface tension may be achieved, where necessary, by, for example, adding a wetting agent to the liquid in the reservoir, by making the porous plastics material in hydrophilic form, or by rendering hydrophobic material hydrophilic. Examples of ways in which a hydrophilic porous plastics material may be produced are incorporating in the polymer chains units derived from hydrophilic monomers, treating a hydrophobic porous plastics material with a wetting agent, for example, a surfactant or a detergent, to provide a coating on the plastics material, and treating a hydrophobic porous plastics material by physical means to render it hydrophilic. Where the porous plastics material is treated with a wetting agent (a substance with a hydrophilic portion and a hydrophobic portion), the wetting agent is preferably such as to remain bonded to the surface of the plastics material even after prolonged contact of the treated material with water. The term "hydrophilic plastics materials" as used in this specification includes both plastics material that are inherently hydrophilic and plastics materials that have been treated to render them hydrophilic.

Porous plastics materials may have uses in irrigation systems other than those already described herein. Thus, for example, a hollow member for conveying water, or other aqueous medium, to a cultivation medium for plants may comprise a porous plastics material, or a solid elongate member, for example, a rod, of porous plastics material may in some circumstances be used without an outer hollow member or other covering, although the advantages obtainable in accordance with the invention are not obtained where no outer hollow member or covering is used. Alternatively, or in addition, at least part of a reservoir may comprise porous plastics material. Thus, for example, the base and/or side(s) of a buried reservoir may comprise porous plastics material, as may, for example, at least of part the base of a reservoir to be positioned on top of the cultivation medium. One advantage of porous plastics materials is that they can readily be moulded to the desired shape.

Accordingly, in a further aspect the invention also provides the use of a porous plastics material in or as a means for delivering a liquid to a cultivation medium for plants. The invention further provides a hydrophilic porous plastics material and the use of such a material, in particular, the use of such a material in or as a means for delivering water or an aqueous liquid to a cultivation medium for plants. More particularly, the invention provides the use of a member comprising a porous plastics material, especially a hydrophilic porous plastics material, in or as a means for delivering a liquid, particularly water or an aqueous liquid, to a cultivation medium for plants, the arrangement being such that, in passing from a supply means for the liquid to the said cultivation medium, the liquid passes through the said member.

When at least part of a reservoir comprises a porous material, the porous material could be, for example, any of the other materials mentioned herein as being suitable for use as the liquid-permeable insert material.

In a further embodiment of the invention, the liquid-permeable means also comprises a liquid-permeable material, through which water can pass, advantageously by capillary action, from the reservoir to the cultivation medium in which the plant(s) is or are to grow or is or are growing, the liquid-permeable material having a permeability which differs from that of the insert. The liquid-permeable material may be such that it can accommodate itself to the shape of the interior of the hollow member. The material may, for example, be granular or fibrous. Examples of materials which may be used as the liquid-permeable material are sand, fine gravel, grit, alumina, mineral fibre/wool, sawdust, absorbent starch granules, ground brick, cotton wool, wood fibres, cellulosic fibres generally, ground glass, blotting paper, absorbent cloth, Fullers earth, moss and cultivation media, preferably a cultivation medium, for example, compost or peat, the same as that in which the plant(s) is or are set or to be set. Other materials that may be used include synthetic fibrous materials, for example glass fibres, polyester fibres, or polyamide fibres. Fibrous materials can merely be packed into the hollow member, or may be formed into a self-supporting wick in the form of, for example, a fabric or a cord, or in the form of an outer covering containing fibres, for example, synthetic fibres, which preferably extend in a generally longitudinal direction. A wick in the last-mentioned form is particularly easy to position in and remove from a hollow member.

An advantageous wick member which may be used in accordance with the invention comprises an outer covering, for example, a tubular covering, containing fibres, for example, polyamide fibres, polyester fibres, or cellulosic fibres, which preferably extend in a generally longitudinal direction. The fibres are preferably relatively closely packed in the outer covering. Preferably the fibres protrude somewhat from the outer covering at one or both ends; this may permit better contact of the fibres and a rigid member, for example, an insert, adjacent to the wick member.

Where the form of the liquid-permeable material makes this desirable, particularly when the said material is in granular form, the hollow member and/or the base of the reservoir may if desired be provided with means for retaining the liquid-permeable material in the hollow member. Thus, for example, the hollow member may have a closed bottom and be provided with openings in and/or near the bottom, or the lower end of the hollow member may be open and extend into a recess in the base of the reservoir, the recess being filled with the liquid-permeable material.

The invention also provides apparatus for delivering a liquid to a cultivation medium for plants, the apparatus comprising a reservoir for the liquid and a liquid-impermeable elongate hollow member through which, in use, the liquid can pass from the reservoir to the cultivation medium, the hollow member containing a liquid-permeable material and an insert comprising a substantially non-compressible liquid-permeable material.

Normally the insert will have a permeability which is less than that of the liquid-permeable material, the insert acting to reduce the rate of flow of the liquid through the hollow member. In this case, the insert may have pathways for water therein that are longer, more tortuous, narrower and/or less "water-attractive" than pathways in the water-permeable material in the part of the hollow member not occupied by the insert.

The invention also provides the use of a second liquid-permeable material, in a system for delivering a liquid to a cultivation medium for plants, to control the passage of the liquid through a hollow member containing a first liquid-permeable material, the liquid passing through the hollow member from supply means for the liquid to the cultivation medium. Preferably, the permeability of the second liquid-permeable material is less than that of the first.

It will be appreciated that where, as is normally the case, it is desired to reduce the rate at which water is delivered to the cultivation medium via a liquid-permeable material contained in the hollow member, all that is required is that the insert (or second liquid-permeable material) has a permeability such as to give a reduction in the flow rate that would be obtained if the insert (or second liquid-permeable material) were replaced by the same volume of the said liquid-permeable material (or the first liquid-permeable material). The use of an insert (or second liquid-permeable material) in combination with a hollow member which is liquid-impermeable for at least part of its length makes it possible to deliver a controlled amount of water to a cultivation medium over an extended time.

In accordance with the invention, the insert, which is preferably a member introduced into the hollow member rather than being, for example, a member formed simultaneously with the hollow member or a member around which the hollow member is formed, may be chosen to obtain a rate of flow of water from the reservoir to the cultivation medium that is appropriate to the plant(s) growing in the cultivation medium, that is, the insert acts as a flow-control member. The fact that the rate of flow of water can be controlled in this way makes it possible to overcome the problem frequently found in the past of water being delivered too quickly to the plant(s) immediately after filling of the reservoir, with the result that frequent filling of the reservoir was necessary, and in some cases, the plant(s) was or were damaged. One preformed insert member can readily be replaced by another giving a different flow rate (for example, an insert member of different permeability and/or thickness) if it is found desirable for water to be supplied at a different rate. The most appropriate insert for use in any given situation may readily be determined by routine experimentation, the fact that the insert comprises liquid-permeable material which is substantially non-compressible (that is, capable of maintaining its shape under normal conditions of the handling) having the advantage that the relative rate of flow to be expected using a particular insert can be predicted in advance.

Various embodiments of the invention will now be described, by way of example only, with reference to the accompanying drawings, in which:

Fig. 1 is a vertical section through a plant container constructed in accordance with the invention;

Fig. 2 is a vertical section through a plant container provided with irrigation apparatus in accordance with the invention;

Fig. 3 is a schematic representation of an irrigation system according to the invention comprising a plurality of reservoirs linked by conduits;

Fig. 4 is a schematic representation of a system similar to that in Fig. 3 but wherein each of the reservoirs is linked to a common feed conduit;

Fig. 5 is a view of an insert for use in irrigation apparatus in accordance with the invention;

Fig. 6 is a vertical section through the insert of Fig. 5 positioned in a hollow member;

Fig. 7 is a vertical section through a different insert positioned in a hollow member;

Fig. 8 is a vertical section through apparatus in accordance with the invention comprising a liquid-permeable elongate body positioned in a hollow member;

Fig. 9 is a vertical section through a modification of the apparatus shown in Fig. 8;

Fig. 10 shows an advantageous form of wick; and

Fig. 11 is a schematic top view showing a reservoir in the form of a conduit.

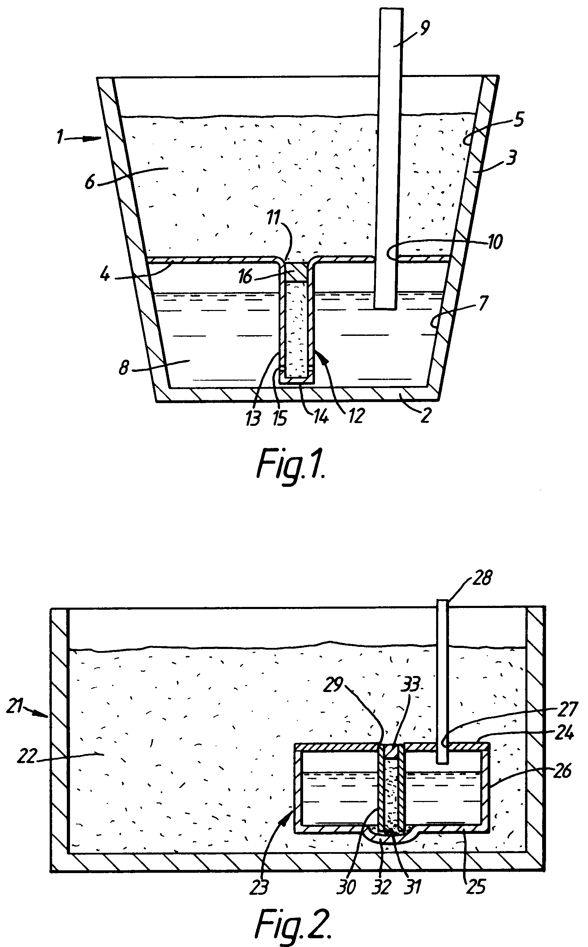

Referring now to the drawings, Fig. 1 shows a frusto-conical plant container 1, of circular cross-section, having a base 2 and a side wall 3. Within the container is positioned a false base 4 the outer edge of which contacts and is supported by the inner surface of the wall 3. The false base divides the container into an upper portion 5, which contains a cultivation medium 6, and a lower portion 7, which forms a reservoir for water 8. A substantially vertical filling tube 9 extends through an opening 10 in the false base 4, the upper end of the tube being above the level of the cultivation medium 6 in the upper portion 5.

Extending downwards from a second opening 11 in the false base 5 is a water-impermeable substantially rigid hollow member 12 which, in the embodiment shown in Fig. 1, is moulded in one piece with the false base. The hollow member comprises a generally vertical wall 13 and a bottom wall 14, the vertical wall 13 being provided, in the region of the bottom wall 14, with a plurality of apertures 15 through which water can pass from the reservoir into the hollow member. The apertures 15 are shown as small holes, but could have any other desired form; thus, for example, they could be in the form of slits. Alternatively, or in addition, one or more apertures could be provided in the bottom wall 14. In the embodiment shown in Fig. 1 the bottom wall 14 is spaced from the base 2 of the container, but, if desired, the bottom wall 14, or protuberances extending therefrom, could rest on the base 2. If desired the base 2 could include one or more protuberances which in use support the hollow member.

In an upper portion of the hollow member 12 there is positioned a water-permeable substantially non-compressible insert 16 the shape and exterior dimensions of which correspond to the shape and interior dimensions of that portion of the hollow member so that the insert fits snugly in the hollow member and extends across the entire cross-section of the hollow member. The remainder of the hollow member 12 is filled with the same cultivation medium as that contained in the upper portion 5 of the container. In the drawings, the insert is shown as being in direct contact with the cultivation medium in the hollow member and with the cultivation medium in the upper portion 5 of the container, but it will be appreciated that other arrangements are possible provided that there is a continuous path by which water can pass by capillary action from the reservoir to the cultivation medium in which the plant(s) is/are set. Thus, for example, the false base could be covered by a layer of sand or gravel or other capillary medium which is in turn covered by the cultivation medium 7.

When the reservoir is filled with water, water passes through the apertures 15 into the hollow member, and thereafter travels upwards by capillary action through the cultivation medium and the solid insert 16 contained in the hollow member to the cultivation medium 6 in the upper portion 5 of the container. It will be appreciated that, where it is desired to change the rate at which the water is supplied to the cultivation medium 6, the insert 16 may readily be replaced by an insert giving an appropriate flow rate.

In the embodiment of the invention shown in Fig. 2, a plant container 21 contains a cultivation medium 22 which surrounds a water tank 23 having a lid 24, a base 25 and a side wall 26 integral with the base 25. The lid 24 of the tank is provided with an aperture 27 through which passes a filling tube 28 similar to the filling tube 9 in Fig. 1. The lid 24 has a second opening 29 from which a hollow member 30 extends downwards into the tank. The hollow member may, if desired, be moulded in one piece with the lid. The hollow member 30 is open at its lower end 31, which is positioned in a recess 32 in the base 25 of the tank. The recess 32 and the hollow member 30 contain a water-permeable material which accommodates itself to the shape of the interior of the hollow member, for example, sand, gravel, or cultivation medium, and an insert 33, similar to the insert 16 in Fig. 1, is positioned in the upper portion of the hollow member to control the rate at which water travels through the hollow member to the cultivation medium 22 in the container 21. It will be appreciated that more than one tank 23 could if desired be positioned in a single container 21, and the tank 23 in Fig. 2 or the false bottom 4 in Fig. 1 could if desired be provided with more than one hollow member.

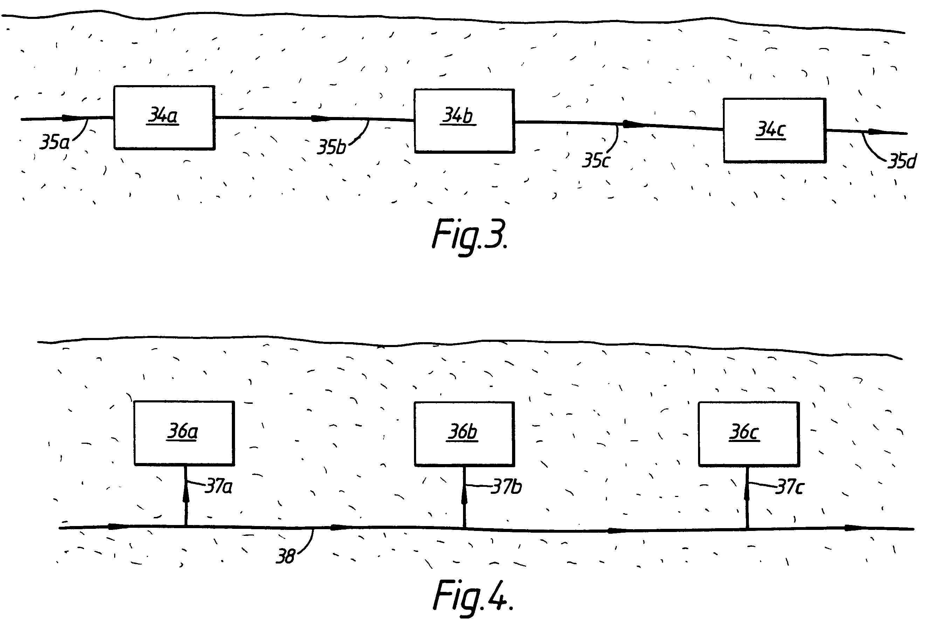

Where the area to be irrigated is large, for example, where plants are growing in a large container or in the open ground, it is advantageous to use a plurality of tanks of the general type shown in Fig. 2 but with the filling tube 28 replaced by a supply conduit which extends substantially horizontally through the cultivation medium in the container or through the ground. Figs. 3 and 4 show schematically two possible arrangements of this kind, the arrangement shown in Fig. 3 having a plurality of tanks 34a, 34b, 34c and a series of conduits 35a, 35b, 35c, 35d connected in series, while in the arrangement shown in Fig. 4 each of the tanks 36a, 36b, 36c is fed by a respective feed conduit 37a, 37b, 37c extending from a common feed conduit 38.

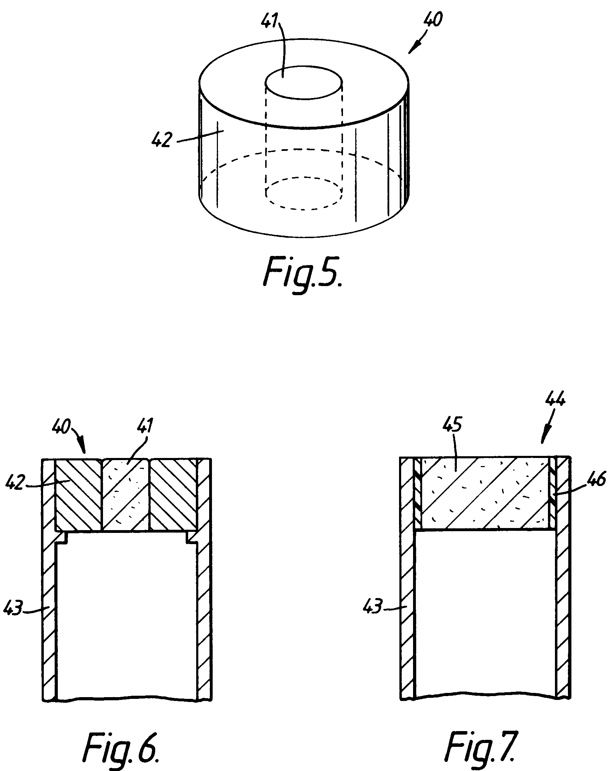

Fig. 5 shows an insert 40 which may be used in place of the insert 16 in Fig. 1 or the insert 33 in Fig. 2. The insert 40 comprises a substantially non-compressible cylindrical core 41 of water-permeable material and an outer annulus 42 of water-impermeable material. In Fig. 6 the insert 40 is shown positioned in the upper portion of a hollow member 43.

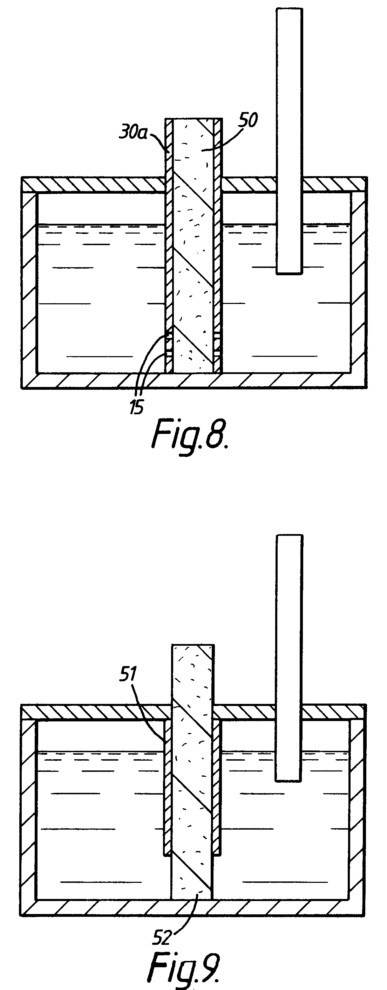

A further form of insert is shown in Fig. 7. Substantially the whole of the insert 44 shown in Fig. 7 comprises a substantially non-compressible water-permeable member 45, the member 45 being provided with a relatively thin outer layer 46 of an elastomeric water-impermeable material which forms a seal between the hollow member 43 and the water-permeable member 46, thus preventing water from by-passing the water-permeable member.

Fig. 8 shows irrigation apparatus generally similar to that shown in Fig. 2, but with the hollow member 30a completely filled by an elongate substantially non-compressible insert 50 of water-permeable material; the insert 50 extends for the entire length of the hollow member. (In an alternative arrangement, not shown, the exterior diameter of the elongate insert could be smaller than the interior diameter of the hollow member.) Water passes into the hollow member via apertures 15 in the wall thereof, and then travels through the elongate insert to the cultivation medium. In the apparatus shown in Fig. 9, the hollow member 30a shown in Fig. 8 is replaced by a substantially rigid hollow member 51 of water-impermeable material into which an insert 52 is introduced. The lower and upper ends of the insert 52 are not covered with water-impermeable material, in order to permit passage of water from the reservoir into the insert and from the insert into the cultivation medium respectively. Other possibilities for allowing the necessary transfer of water will readily occur to those skilled in the art.

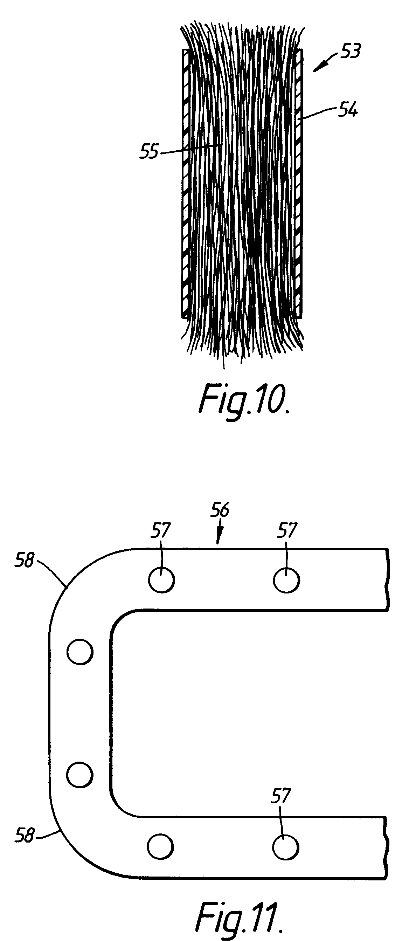

Fig. 10 shows an advantageous wick member 53 for use in accordance with the invention. The wick member 53 comprises a tubular covering 54 of plastics material and fibres 55 extending longitudinally within the covering and protruding slightly from both ends thereof. The wick shown in Fig. 10 could if desired replace the cultivation medium used as water-conveying means in the hollow member 12 in Fig. 1 or the water-permeable material in the hollow member 30 in Fig. 2. If a wick were used in place of the material used in Fig. 2, the use of a recess 32 to assist in retaining water-permeable material in the hollow member would be unnecessary.

Fig. 11 is a plan view of a reservoir in the form of a conduit 56 and a plurality of hollow members 57 extending from the conduit. The conduit is shown as being bent through 90° at 58, but could of course be laid in any other desired configuration.

**Claims**

1. Apparatus for delivering a liquid to a cultivation medium for plants, which comprises a reservoir and an elongate hollow member which has first and second ends and, for at least part of its length, is impermeable to the liquid, the first end of the hollow member being positioned in the reservoir and the second end being positioned outside or conterminous with the reservoir, the hollow member containing liquid-permeable means through which, in use, liquid can pass from the reservoir to the cultivation medium, the liquid-permeable means comprising, at least in part, an insert which consists in whole or in part of substantially non-compressible liquid-permeable material, and the insert being arranged such that substantially all the liquid which passes from the reservoir to the cultivation medium passes through the insert.

2. Apparatus as claimed in claim 1, wherein the insert, or the liquid-permeable part thereof, is substantially rigid.

3. Apparatus as claimed in claim 1 or claim 2, wherein the insert extends for only part of the length of the hollow member.

4. Apparatus as claimed in claim 1 or claim 2, wherein the insert extends for substantially the entire length of the hollow member and the liquid-permeable means consists of the insert.

5. Apparatus as claimed in any one of claims 1 to 4, wherein the insert, or the liquid-permeable part thereof, is formed by moulding or extruding a particulate or fibrous material, preferably one or more of mortar, concrete, plaster, wood fibres, sawdust, porous plastics materials, sintered glass or nylon mesh.

6. Apparatus as claimed in any one of claims 1 to 4, wherein the insert, or the liquid-permeable part thereof, comprises a material whose manufacture includes a firing step, preferably brick, terracotta, or a ceramic material.

7. Apparatus as claimed in any one of claims 1 to 4, wherein the insert, or the liquid-permeable part thereof, comprises a water-permeable stone material or wood.

8. Apparatus as claimed in claim 3 or any claim dependent thereon, wherein the liquid-permeable means also comprises a liquid-permeable material having a permeability which differs from that of the insert, the permeability of the insert preferably being less than that of the said liquid-permeable material.

9. Apparatus as claimed in claim 8, wherein the liquid-permeable material comprises a granular or fibrous material, a cultivation medium the same as that in which the plant(s) is or are set, or is or are to be set, or an outer covering containing fibres extending in a generally longitudinal direction.

10. Apparatus as claimed in any one of claims 1 to 9, wherein the reservoir forms the lower portion of a plant-container, or the reservoir is buried in the cultivation medium in a plant-container, or in the ground.

11. Apparatus as claimed in any one of claims 1 to 10, wherein there are a plurality of reservoirs and the reservoirs are connected in series or connected to a common feed conduit, or wherein the reservoir is in the form of a conduit from which one or more hollow members extend.

12. Apparatus for delivering a liquid to a cultivation medium for plants, the apparatus comprising a reservoir for the liquid and a liquid-impermeable elongate hollow member through which, in use, the liquid can pass from the reservoir to the cultivation medium, the hollow member containing a liquid-permeable material and an insert at least part of which is substantially non-compressible and comprises a substantially non-compressible liquid-permeable material, the insert preferably comprising wood, a water-permeable stone material, or a water-permeable material whose manufacture includes a firing step, or which is preformed by moulding or extruding before introduction of the insert into the hollow member.

13. Apparatus for delivering a liquid to a cultivation medium for plants, the apparatus comprising a reservoir for the liquid and a substantially non-compressible insert comprising liquid-permeable material through which, in use, the liquid can pass from the reservoir to the cultivation medium, one end of the insert being positioned in the reservoir and the insert being surrounded, for at least part of its length, by a hollow member which is impermeable to the liquid.

14. A plant-container comprising apparatus as claimed in any one of claims 1 to 13.

15. A method of delivering a liquid to a cultivation medium for plants wherein apparatus as claimed in any one of claims 1 to 13 is used, the liquid being introduced into the reservoir and passing through the hollow member to the cultivation medium.

16. The use of an insert comprising substantially non-compressible liquid-permeable material, in a system for delivering a liquid to a cultivation medium for plants, to control the passage of a liquid through a hollow member through which the liquid passes from a reservoir to the cultivation medium.

17. The use of a second liquid-permeable material, in a system for delivering a liquid to a cultivation medium for plants, to control the passage of the liquid through a hollow member containing a first liquid-permeable material, the liquid passing through the hollow member from supply means for the liquid to the cultivation medium and the permeability of the second liquid-permeable material preferably being less than that of the first.

18. The use of a liquid-permeable substantially non-compressible elongate body, in a system for delivering a liquid to a cultivation medium for plants, to control the passage of the liquid from a reservoir for the liquid to the cultivation medium, one end of the body being positioned in the reservoir and the body extending from the said one end and being surrounded, for at least part of its length, by a covering which is impermeable to the liquid.

19. The use of a porous plastics material, particularly a hydrophilic porous plastics material, in or as a means for delivering a liquid, particularly an aqueous liquid, to a cultivation medium for a plant.

**Fig.1.**

**Fig.2.**

Fig.3.

Fig.4.

Fig.5.

Fig.6.

Fig.7.

30a    50

15

*Fig.8.*

51

52

*Fig.9.*

Fig.10.

Fig.11.

**European Patent Office**

# EUROPEAN SEARCH REPORT

Application Number

EP 92 30 4662

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-0 390 948 (R. REUSS) | 1,3-5, 8-10, 14-19 | A01G27/00 |
| Y | * column 4, line 33 - line 54 * | 11 | |
| A | * column 5, line 4 - line 26 * | 6,7,12, 13 | |
| | * column 5, line 53 - column 6, line 29; figures 1,2,10-13 * | | |
| | --- | | |
| Y | US-A-4 183 176 (W. G. BARFIELD) * abstract; figure 1 * | 11 | |
| | --- | | |
| X | EP-A-0 290 755 (P. REUSS ET AL.) | 19 | |
| A | * column 4, line 9 - line 35; figures 1,2 * | 1,3,6,8, 10,12-18 | |
| | --- | | |
| A | GB-A-2 204 222 (SELSMORE LIMITED) | 1,4,5, 10-15,18 | |
| | * page 2, line 21 - page 3, line 19; figure 1 * | | |
| | ----- | | **TECHNICAL FIELDS SEARCHED (Int. Cl.5 )** |
| | | | A01G |

The present search report has been drawn up for all claims

| Place of search | Date of completion of the search | Examiner |
|---|---|---|
| BERLIN | 02 SEPTEMBER 1992 | MARTIN DEL RIO A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)